# EUROPÄISCHE PATENTANMELDUNG

(11) **EP 1 203 853 A2**
(43) Veröffentlichungstag der Anmeldung: **08.05.2002**
(21) Anmeldenummer: 01122105.8
(22) Anmeldetag: 14.09.2001
(51) Int. Cl.: E04F 13/08

(54) **Befestigungselement und Verfahren zu dessen Montage**

(30) Priorität: 02.11.2000 DE 10054281
(71) Anmelder: Müller, Werner, CH-6300 Zug (CH); Kuster, Hans Peter, CH-6300 Zug (CH)
(72) Erfinder: Müller, Werner, CH-6300 Zug (CH); Kuster, Hans Peter, CH-6300 Zug (CH)
(74) Vertreter: Jacoby, Georg

(57) **Zusammenfassung**

Die Erfindung betrifft ein Befestigungselement zur Abstandsbefestigung von Leisten (31) an einer bevorzugt vertikalen Wand (27), mit einer Schraube (3), deren eines Ende (5) zur Befestigung an der Wand ausgestaltet ist und deren anderes Ende (7) ein Gewinde aufweist, und mit einem Leistenhalter (15), der über ein ein Gegengewinde aufweisendes Bauteil (11, 13) mit der Schraube (3) verschraubt ist. Bei diesem Befestigungselement ist der Leistenhalter (15) gegenüber dem das Gegengewinde aufweisenden Bauteil (11, 13) frei verdrehbar und gegenüber diesem und einer Leiste durch eine Drehung festlegbar.

Zur Montage solcher Befestigungselemente wird eine Laserstrahlquelle angebracht, deren rotierender Laserstrahl die Ebene beschreibt, in der sich die Leistenträger befinden sollen, oder eine zu dieser parallele Ebene. Die Einstellschraube wird mittels eines Schraubendrehers bis zu einer Tiefe eingeschraubt, die von einem an dem Schraubendreher angebrachten Laserempfänger vorgegeben wird.

## Beschreibung

Die Erfindung bezieht sich auf ein Befestigungselement zur Abstandsbefestigung von Leisten an einer bevorzugt vertikalen Wand, mit einer Schraube, deren eines Ende zur Befestigung an der Wand ausgestaltet ist und deren anderes Ende ein Gewinde aufweist, und mit einem Leistenhalter, der über ein ein Gegengewinde aufweisenden Bauteil mit der Schraube verschraubt ist.

Ein solches Befestigungselement ist aus der EP 0 921 252 A2 bekannt und weist eine Schraube auf, deren eines Ende ähnlich einer Holzschraube, das andere Ende als Gewindeschraube ausgebildet ist. Zwischen diesen beiden Abschnitten weist die Schraube einen Sechskantabschnitt zum Ansetzen eines Werkzeugs auf.

Nachdem in einer Wand eine zu deren Oberfläche senkrecht verlaufende Bohrung eingebracht und in diese ein Spreizdübel eingesetzt wurde, wird die Schraube mit dem einer Holzschraube ähnelnden Ende in den Dübel eingeschraubt, bis der Sechskantabschnitt auf dem Rand der Bohrung aufsitzt und die Schraube so abstützt, daß deren Ende mit Gewinde senkrecht, also in der Regel horizontal, von der Wand absteht.

Ein Leistenhalter ist vorgesehen, der eine zur Erstreckungsebene der Leisten senkrechte Gewindebohrung aufweist. Die Leisten tragen nämlich eine Wandverkleidung etwa aus Platten, die sich insgesamt parallel zur Wand erstreckt. Die genannte Gewindebohrung ist in einem Bauteil in Form einer an dem Leistenhalter fest angeschweißten Büchse mit Innengewinde ausgebildet. Der Leistenhalter wird nun über das Bauteil mit Innengewinde auf den Gewindeabschnitt der obengenannten Schraube aufgeschraubt, bis der Leistenhalter einen gewünschten Abstand von der Wand aufweist, wobei nach der Anbringung der Befestigungselemente dann alle Leistenhalter in einer Ebene liegen sollen.

Der Leistenhalter muß allerdings auch eine bestimmte Lage in dieser Ebene einnehmen, da die von ihm getragene Leiste sich in einer vorbestimmten Richtung erstrecken soll, meist vertikal oder horizontal. Wenn man ihn aber in seine Richtung zu drehen versucht, muß man ihn notwendigerweise heraus- oder hineinschrauben. Wenn man als kleinstmögliches Gewinde ein Gewinde M6 annimmt, dann sind Fehlerabstände von bis zu 0,5 mm, von der Ebene aus gemessen, unvermeidlich.

Dies ist aber nicht der einzige Nachteil des bekannten Befestigungselements. Es kommt nämlich bei zügiger Arbeit, wenn man die Lage der Leistenhalter nach dem Aufschrauben auf die von der Wand abstehenden Gewindeenden rasch bestimmen will, zu Meßfehlern, die sich im ungünstigen Fall auf die obengenannte Lagetoleranz der Leistenhalter noch aufaddieren. So kann es zu Lageabweichungen der Leistenhalter kommen, die nicht mehr hinnehmbar sind.

Diese Lageabweichungen lassen sich nur durch sorgfältiges und demnach zeitraubendes Ausmessen minimieren.

Ein weiterer Nachteil liegt darin, daß, wie schon oben erwähnt, die Schraube ausdrücklich unabhängig vom Leistenhalter in ihren Dübel eingeschraubt werden muß. Erst dann kann der Leistenhalter auf die Schraube aufgeschraubt werden. Hierbei ist es neben Mauervorsprüngen oft nötig, den Dübel und die Schraube mit erheblichem Abstand zum Vorsprung anzubringen, denn beim Aufschrauben auf das Gewindeende muß der Leistenhalter unbehindert einen Kreisbogen beschreiben können, der einen recht großen Durchmesser hat, weil das Gegengewinde am Leistenhalter bevorzugt in dem als Gewindebüchse ausgebildeten Bauteil eingebracht ist, wobei die Gewindebüchse seitlich an dem Leistenhalter angeschweißt ist. Somit unterliegt das bekannte Befestigungselement Beschränkungen, was seine Anbringung an der Wand angeht.

Die Leisten werden an jedem der Leistenträger der bekannten Befestigungselemente angeschraubt. Das ist zeitraubend. Außerdem werden erfahrungsgemäß in der Eile oft Schrauben weggelassen, so daß die Qualität der Befestigung oft gering ist.

Ausgehend von diesem Stand der Technik liegt der Erfindung die Aufgabe zugrunde, das bekannte Befestigungselement dahingehend zu verbessern, daß sein Leistenhalter in einer präzisen Abstandslage zur Wand angeordnet werden kann, und daß auch die Montage dicht an Mauervorsprüngen möglich ist. Ferner soll ein Verfahren angegeben werden, wie eine Anzahl solcher Befestigungselemente rasch so montiert werden kann, daß alle Leistenträger sich mit hoher Präzision in einer Ebene befinden. Ferner sollen auch die Leisten zusammen mit den Leistenträgern dahingehend weitergebildet werden, daß diese Leisten rasch, präzise und dauerhaft angebracht werden können.

Diese Aufgabe wird erfindungsgemäß dadurch gelöst, daß der Leistenhalter gegenüber dem das Gegengewinde aufweisenden Bauteil frei verdrehbar und an diesem festlegbar ist.

Der wesentliche Unterschied zum Befestigungselement aus dem Stand der Technik liegt darin, daß der Leistenhalter nicht, wie es bekannt ist, ein Gegengewinde zu dem der Schraube trägt, sondern daß ein eigenes, also zusätzliches, gesondertes Bauteil vorhanden ist, was der Fachmann grundsätzlich gerade zu vermeiden trachtet. Das Bauteil kann bis in jede gewünschte Lage in das Innengewinde der Schraube eingeschraubt werden, wobei aber der Leistenhalter der Drehung der Schraube nicht folgt, da er gegenüber diesem verdrehbar ist. Wenn der Leistenhalter nun seine gewünschte Abstandslage erreicht hat, kann er in jede Ausrichtung gedreht werden, ohne diese Abstandslage irgendwie zu ändern.

Hier ergibt sich aber ein unerwarteter Vorteil: der Leistenhalter kann bereits zusammen mit dem Bauteil und der Schraube zusammengebaut sein, bevor diese in ihren Dübel eingeschraubt wird. Dabei kann der Schaft der Schraube passend zu einem Werkzeug ausgebildet sein. Der Leistenhalter behindert das Eindrehen der Schraube in den Dübel nicht, da er sich währenddessen nicht mitzudrehen braucht bzw. sich nicht in seiner Abstandslage verändert. Ferner kann der Leistenhalter dicht an einem Mauervorsprung montiert werden, da er sich nicht an diesem vorbeidrehen muß, wie das beim bekannten Befestigungselement der Fall ist.

Somit ergibt sich durch die Hinzufügung eines zusätzlichen Bauteils zum bekannten Befestigungselement zwar vordergründig ein Nachteil, doch resultiert aus diesem die Lösung der obigen Aufgabe, also ein Vorteil, der diesen Nachteil weit mehr als aufwiegt.

Bevorzugt ist das Gewinde der Schraube ein Innengewinde. Ganz besonders bevorzugt ist das Bauteil eine in das Innengewinde einschraubbare, einen Kopf aufweisende Einstellschraube, die den Leistenhalter verdrehbar durchsetzt, wobei der Leistenhalter an der Einstellschraube festlegbar ist. Vorteilhaft kann somit die Schraube durch Drehen der Einstellschraube, die vormontiert bis zum Anschlag in das Innengewinde der Schraube eingeschraubt ist, in den Dübel eingeschraubt werden und anschließend kann durch Drehen der Einstellschraube in Gegenrichtung (bei klemmender Verschraubung der Schraube im Dübel) der Abstand des Leistenhalters von der Wand eingestellt werden. Es ist somit lediglich ein einmaliges Ansetzen eines Werkzeuges erforderlich, dessen Drehrichtung einmal umgeschaltet werden muß. Entsprechend vorbereitete kraftgetriebene Schraubendreher können beispielsweise die Drehrichtung nach Erreichen eines vorgegebenen Festzieh-Drehmoments automatisch umschalten.

Die Schraube des erfindungsgemäßen Befestigungselements kann wie die bekannte Schraube einstückig hergestellt sein. Bevorzugt ist sie jedoch aus einem Bolzen hergestellt, der das holzschraubenartige Ende der Schraube bildet und auf dessen freies Ende eine Hülse oder ein Rundstahl aufgesetzt ist, deren ihrerseits freies Ende das Innengewinde trägt.

Die Hülse kann dabei mit dem Bolzen verschweißt, verklemmt oder verschraubt sein. Auch eine Verklebung kommt etwa dann in Frage, wenn die Hülse etwa aus Kunststoff bestehen sollte.

An der Verbindungsstelle zwischen Bolzen und Hülse kann diese im Durchmesser über den Bolzen überstehen, so daß sie eine Schulter bildet, die einer Beilage oder einem Dampf-Sperr-Ring Halt bietet. Hierdurch werden die Vorzüge erhalten, die beim bekannten Befestigungselement der angeformte, überstehende Sechskant bietet. So kann diese Schulter beispielsweise als Anschlag zum Festlegen der genauen Einschraubtiefe der Schraube in die Wand dienen. Ein entsprechender im Drehmoment einstellbarer kraftgetriebener Schraubendreher schaltet das Einschrauben bei Erreichen des voreingestellten Drehmoments ab, wenn also der Anschlag an das Mauerwerk stößt.

Es ist aber auch möglich, unterschiedlich lange Hülsen zu bevorraten und mit einem Standdardbolzen zu verschrauben, wenn etwa unterschiedlich dicke Isolierschichten von der Hülse durchsetzt werden sollen.

Zudem bietet die Hülse den Vorteil, daß sie aus einem genormten Rohr hergestellt ist, das nur abzulängen und mit einem Innengewinde zu versehen ist. Dennoch entsteht ein recht biegesteifes Bauteil, das auch Querkräfte aufzunehmen vermag.

Der Kunststoff-Spreizdübel bildet eine Wärmesperre zwischen der Wand und dem Befestigungselement. Es ist aber auch möglich, die Hülse aus Kunststoff oder faserverstärktem Kunststoff herzustellen. Wenn die Hülse eine Wärmeisolierung durchsetzt, bildet sie somit keinerlei Wärmebrücke innerhalb der Isolierung.

Der Leistenhalter könnte grundsätzlich die Einstellschraube seitlich untergreifen und an dieser in der Endlage festgeklemmt werden.

Gemäß eine bevorzugten Ausgestaltung durchsetzt jedoch die Einstellschraube voll den Leistenhalter, stützt sich mit ihrem Kopf auf einem Gegensitz im Leistenhalter ab und wird von einer Leiste (die insoweit Teil des Befestigungselementes bildet) gegen den festgehaltenen Leistenträger angedrückt. Der Leistenträger ist somit spielfrei an der Einstellschraube und ebenso an der Leiste befestigt. Die ohnehin notwendige Befestigung der Leiste am Leistenträger übernimmt somit auch dessen Festlegung in Bezug auf die Einstellschraube.

Durch diese kraftschlüssige Verbindung von Einstellschraube, Leistenhalter und Leiste müssen keine Bohrungen mehr an den Leisten angebracht werden, wie das bei den Befestigungselementen aus dem Stand der Technik erforderlich war. Somit sind auch keine weiteren Befestigungsteile, wie Schrauben, Nieten, etc., mehr für die Befestigung der Leisten an dem Befestigungselement nötig. Beim bekannten Befestigungselement wird nämlich die Leiste mit dem Leistenträger verschraubt. Da die zu diesem Zweck verwendeten Schrauben nach Anbringen einer Fassadenverkleidung nicht mehr sichtbar sind, kann man ihre Anbringung auch nicht mehr überprüfen. Es liegt also nahe, daß bei Zeitmangel diese Schrauben teilweise weggelassen werden, zumal das Eindrehen dieser Schrauben recht zeitraubend ist.

Bei der Erfindung ist dagegen am Leistenhalter bevorzugt einstückig eine längliche, drehbare Ausbildung vorgesehen, die mit dem Leistenhalter verdrehbar ist, in unverdrehtem Zustand zwischen zwei Hinterschneidungen in der Leiste eingeführt wird und nach dem Verdrehen diese wie bei einem Bajonettverschluß hintergreift. Notwendig ist lediglich das Verdrehen der drehbaren Ausbildung um etwa 90°. Dafür ist dann die Leiste vollständig und zuverlässig am Leistenhalter befestigt. Es ist allenfalls ein Werkzeug erforderlich, mit dem die Leiste und der Leistenhalter hintergriffen werden kann und dieser verdreht werden kann, um diesen formschlüssigen Kraftschluß zu erreichen.

Die genannte Ausbildung kann an ihren beiden Schmalseiten jeweils eine Kante mit einer Kontur aufweisen, die dem Ausschnitt einer archimedischen Spirale entspricht. Beim Verdrehen verklemmt sich die Ausbildung dann seitlich am Grund der Ausnehmungen, die die Hinterschneidungen bilden.

Auch eine keilförmige Ausbildung der genannten Schmalseiten wäre möglich, so daß sich die Ausbildung axial hinter den Hinterschneidungen festklemmt.

Diese Klemmsitze sind jedoch unsicher und können bei zu festem Anziehen der genannten Ausbildung zu Schäden an dieser und/oder der Leiste führen.

Gemäß einer bevorzugten Ausgestaltung der Erfindung weist der Leistenhalter daher mindestens ein Federelement auf, das bei dessen Verriegelung mit der Leiste in Eingriff tritt und sich mit dieser verrastet.

Die Rast hält die Ausbildung zuverlässig in der veriegelten Stellung fest, und der Monteur kann beim Einrasten vermerken, daß die Verriegelung nunmehr vorliegt. Dennoch ist notfalls die Verriegelung wieder aufhebbar, etwa wenn später einmal Reparaturen vorgenommen werden müssen und z.B. eine Leiste ausgetauscht werden muß. Eine solche Reparatur kann ohne weiteres vorkommen, etwa wenn ein Auto gegen die verkleidete Wand oder Fassade fährt.

Eine besonders einfache, aber zuverlässige Rasteinrichtung besteht gemäß einer bevorzugten Ausgestaltung der Erfindung darin, daß am Leistenhalter parallel zur länglichen Ausbildung zwei auseinanderweisende bzw. gegenüberliegende Federschenkel vorgesehen und bevorzugt angeformt sind, die sich bei Eingriff der länglichen Ausbildung in die Ausnehmungen mit deren freiem Rand verrasten. Dabei kann die der Wand zugewandte Kante der Ausnehmungen jeweils durch einen Steg verlängert sein; das der Wand zugewandte freie Ende dieser Stege bildet demnach den freien Rand der Ausnehmungen.

Da die beiden Federschenkel einander gegenüberliegen, heben sich die von diesen ausgeübten Querkräfte auf, so daß die eigentliche Schraube in ihrer Lage senkrecht zur Wand nicht von den Federschenkeln beeinträchtigt wird.

Bei der Montage werden zunächst die Lagen der Dübelbohrungen bestimmt, etwa durch rasterartig auf der Wand mittels Spickschnüren angebrachten Linien. Dabei ist eine Lageabweichung quer zu den später anzubringenden Leisten möglichst zu vermeiden. Die Genauigkeit der Lage in deren Längsrichtung ist dagegen nicht so wesentlich. An den Schnittpunkten der obengenannten Schnüre werden die Dübelbohrungen in die Wand eingebracht und die Dübel werden in diese eingesetzt. Nun werden die Schrauben in die Dübel eingeschraubt, wobei die Leistenhalter schon an den Schrauben angebracht sein können.

Jetzt ist es wesentlich, daß die Leistenhalter alle rasch und einfach, aber dennoch möglichst genau in der dafür bestimmten Ebene angeordnet werden. Dies ist durch Aus- oder Einschrauben der erfindungsgemäßen Einstellschrauben möglich.

Bisher wurde hierzu eine optische Einrichtung verwendet, die einen Beobachter und einen Monteur erforderte, der nach den Anweisungen des Beobachters die Leistenhalter der bekannten Befestigungselemente so lange verdrehte, bis der jeweilige Leistenhalter eine möglichst befriedigende Position einnahm.

Erfindungsgemäß wird nun eine Laserstrahlquelle so positioniert, daß der von dieser ausgesandte und (beispielsweise hin-und hergeschwenkte oder rotierende) Lichtstrahl in einer Ebene liegt, die der gewünschten entspricht oder parallel zu dieser ist. Ist die Laserstrahlquelle erst einmal positioniert, benötigt sie keine Bedienungsperson. Die Einstellschraube wird nun beispielsweise mit einem kraftgetriebenen Schraubendreher so lange gedreht, bis der Laserstrahl bei seiner Schwenkbewegung auf einen in dem Schraubendreher eingebauten oder an diesem angebrachten Laserempfänger trifft. Der Laserempfänger kann nunmehr ein akustisches oder optisches Signal abgeben, daß darauf hinweist, daß die gewünschte Einschraubtiefe erreicht ist. Alternativ kann der Laserempfänger den Schraubendreher auch automatisch abschalten. Wenn dieser Vorgang, der nur von einer Person und von dieser rasch und einfach durchführbar ist, für jede der Einstellschrauben im Bereich des Laserstrahls ausgeführt ist, befinden sich die Schraubenköpfe und damit die Leistenträger alle exakt in derselben Ebene.

Gemäß einer weniger bevorzugten Ausführungsform können an dem Leistenhalter oder dem Kopf der Einstellschraube eine Markierung angebracht sein, mit deren Hilfe die gewünschte Einschraubtiefe visuell bezüglich des Laserstrahl überprüft werden kann. Die Markierung kann ein eingestochener Ring außen am Kopf einer Innensechskantschraube sein, aber auch die Ober- oder Unterkante dieses Kopfes.

Es ist also nach dem Positionieren der Laserstrahleinrichtung nur noch das Eindrehen der Einstellschrauben erforderlich.

Gemäß einer bevorzugten Ausgestaltung der Erfindung ist es möglich, einen kraftgetriebenen Schraubendreher zu verwenden, der einschaltet, wenn er in die Innensechskantbohrung eingedrückt wird, und ausschaltet, wenn ein an ihm angebrachter Laserstrahlempfänger vom Laserstrahl getroffen wird. Auf diese Weise können die Einstellschrauben und damit die Leistenhalter einer ganzen Wand in kürzester Zeit, aber mit bisher unerreichter Präzision angebracht werden. Das nachfolgende Anbringen der Leisten erfordert nur, daß jeweils eine Leiste auf die Leistenhalter einer Reihe von Befestigungselementen aufgesetzt wird, nachdem die länglichen Ausbildungen der Leistenhalter in Richtung der Leiste etwa ausgerichtet wurden, und daß dann jeder der entsprechenden Leistenhalter von einem Werkzeug hintergriffen und um etwa 90° verdreht wird, bis das Einrasten der Federschenkel hörbar wird. Alle Leisten der entprechenden Wand liegen nach dieser einfachen Montage exakt in ein und derselben Ebene, so daß die Montage von Fassadenplatten aus Stein o. dgl. nun ohne Schwierigkeit erfolgen kann.

Der Gegenstand der Erfindung wird anhand der beigefügten, schematischen Zeichnung beispielsweise noch näher erläutert. In dieser zeigt:
Fig. 1 ein erfindungsgemäßes Befestigungselement in der Seitenansicht,
Fig. 2 das Befestigungselement der Fig. 1, in einer Wand mit Isolierschicht angebracht, sowie eine daran angebrachte Leiste im Querschnitt,
Fig. 3 eine Draufsicht auf die Leiste, wobei das Befestigungselement gestrichelt dargestellt ist, und
Fig. 4 die Leiste mit dem Befestigungselement und Fassadenplatten, im Schrägbild und teilweise in Explosionsdarstellung.

Alle Figuren zeigen dasselbe Befestigungselement und, soweit dargestellt, dieselbe Leiste. Für gleiche Teile wurden durchgehend jeweils gleiche Bezugszeichen verwendet.

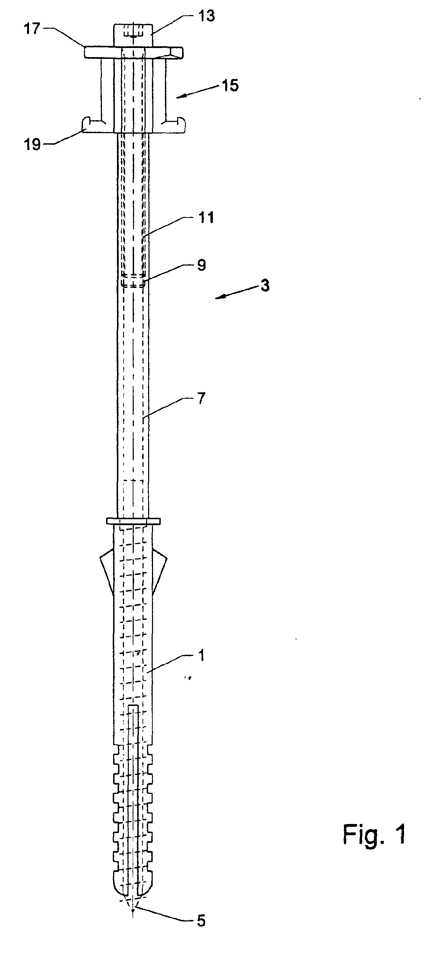

Fig. 1 zeigt einen Dübel 1 aus Kunststoff, in den eine Schraube 3 aus Stahl eingeschraubt ist, die aus einem Bolzen 5 und einer Hülse 7 besteht. Der Bolzen 5 ist wie eine Holzschraube ausgebildet, so daß er in den Dübel 1 rasch eingeschraubt werden kann und dabei den Dübel 1 auseinanderspreizt. Der Bolzen 5 weist, von der Holzschraubenspitze abgewandt, ein zylindrisches Ende auf, das zur Holzschraube hin durch eine Schulter begrenzt ist. Auf dieses zylindrische Ende ist bis zur Schulter die Hülse 7 aufgeschoben, die aus einem nahtlos gezogenen Stahlrohr besteht, dessen Innendurchmesser dem Außendurchmesser des genannten, zylindrischen Endes im wesentlichen entspricht. Die Hülse 7 ist mit diesem Ende verpreßt oder verschweißt. Im freien Ende weist die Hülse 7 ein Innengewinde 9 auf, das sich über eine erhebliche Länge in die Hülse 7 hinein erstreckt.

Der Durchmesser dieses Innengewindes ist ziemlich klein und beträgt bevorzugt M6.

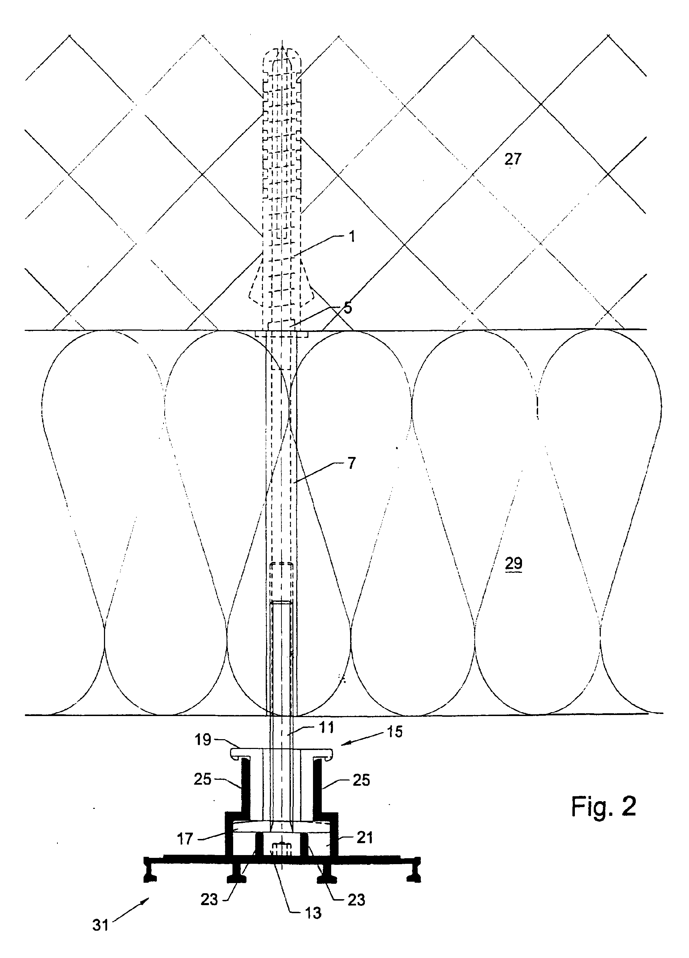

Wie besonders aus Fig. 2 zu sehen ist, steht die Hülse 7 senkrecht von der Wand 27 ab, wenn der Dübel 1 in eine Bohrung in einer Wand 27 eingesteckt ist, und durchsetzt eine Isolierschicht 29, die auf der Wand 27 aufgebracht ist. Dabei entspricht die Länge der Hülse 7 etwa der Dicke der Isolierschicht 29.

In das Innengewinde 9 ist der Schaft 11 einer Innensechskantschraube eingeschraubt, deren Kopf mit 13 bezeichnet ist. Über den Schaft 11 dieser Einstellschraube ist ein Leistenträger 15 aufgeschoben, dessen Mittelbohrung von diesem Schaft 11 durchsetzt wird.

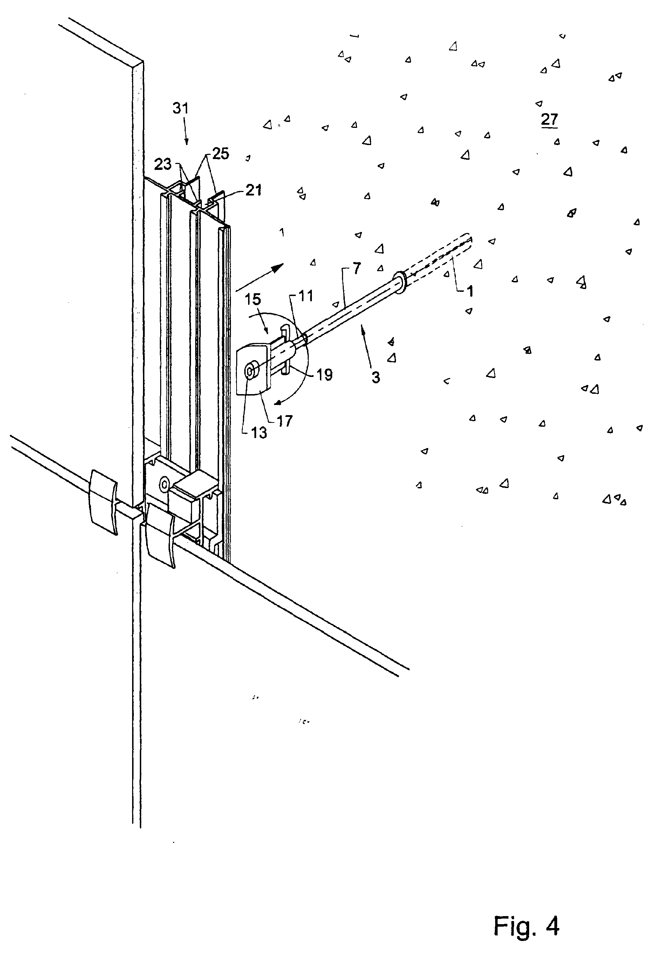

Dieser Leistenträger 15 ist am besten aus der Schrägbilddarstellung der Fig. 4 ersichtlich. Er weist eine ebene, längliche Platte 17 auf, die sich senkrecht zur Bohrung erstreckt, die vom Schaft 11 durchsetzt ist. Die von der Schraube 3 abgewandte Oberfläche der Platte 17 bildet ein Widerlager für die Unterseite des Kopfes 13 der Einstellschraube 11, 13.

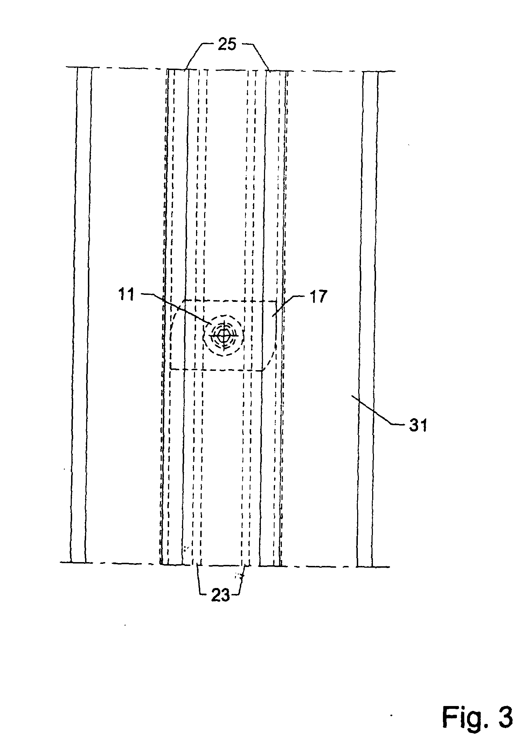

Die Platte 17, die mittig von der Einstellschraube 11, 13 durchsetzt wird, ist im wesentlichen rechteckig, mit der Ausnahme, daß sie an zwei diagonal gegenüberliegenden Ecken abgerundet ist (siehe Fig. 3). Diese Platte 17 ist am von der Schraube 3 abgewandten Ende des Leistenhalters 15 ausgebildet.

Am anderen, der Schraube 3 zugewandten Ende sind am Leistenhalter 15 zwei Federschenkel 19 angeformt, die sich achsparallel zur Platte 17 und einander bezüglich der Mitte des Leistenhalters 15 gegenüberliegend erstrecken. Auf der der Platte 17 zugewandten Seite weisen die Federschenkel 19 jeweils am freien Ende eine vorspringende Warze auf.

Der Leistenhalter kann aus Kunststoff oder Metall bestehen, vorzugsweise aus einer Leichtmetall-Legierung.

Die Leiste 31 ist zum Teil komplementär zum Leistenhalter 15 ausgebildet. Die Leiste 31 ist bevorzugt ein stranggepreßter Profilstab und weist eine ebene, längliche Platte auf, die sich parallel zur Wand 27 erstreckt und von der beiderseits eine Reihe von Längsstegen abstehen.

Auf der von der Wand 27 abgewandten Seite sind vier Stege mit gleichem gegenseitigen Abstand angeordnet. Diese Stege dienen zum Aufschieben von Fassadenplattenhaltern, mittels deren Fassadenplatten befestigt sind, wie in Fig. 4 zu sehen ist.

Auf der anderen, der Wand zugewandten Seite trägt die Platte ebenfalls vier Stege, von denen jeweils zwei zur Längsmitte der Platte symmetrisch angeordnet sind. Nahe der Mitte sind zwei niedrige Stege 23 ausgebildet, deren Höhe der Höhe des Kopfes 13 der Einstellschraube 11, 13 entspricht. Der Abstand der beiden niedrigen Stege 23 entspricht dem Durchmesser des Schraubenkopfes 13. Wenn die Leiste 31 auf den Leistenhalter 15 aufgesetzt ist, dann sitzt der Kopf 13 der Einstellschraube 11, 13 praktisch spielfrei zwischen den niedrigen Stegen, auf der Platte der Leiste 31 und auf der Platte 17 des Leistenhalters 15, während diese Platte 17 gleichzeitig auf den freien Kanten dieser Stege 23 aufsitzt.

Die beiden anderen Stege 25 sind aufeinander zu gekröpft und außerhalb der niedrigen Stege 23 an der Platte der Leiste 31 angesetzt. Die gekröpften Stege 25 erstrecken sich von der Platte der Leiste 31 aus senkrecht zu dieser um eine Strecke, die der Höhe der niedrigen Stege plus der Dicke der länglichen Platte 17 entspricht, dann erstrecken sich die Kröpfungen parallel zur Platte der Leiste 31 aufeinander zu und sie gehen dann in zu dieser Platte senkrechte Endabschnitte über. Der Innenabstand zwischen diesen senkrechten Endabschnitten darf dabei die Länge der Schmalseite der länglichen Platte 17 nicht unterschreiten.

Der Abstand der Außenkanten der Enden der gekröpften Stege ist ein wenig kleiner als der Abstand der Warzen der beiden Federschenkel 19.

Die beiden gekröpften Schenkel 25 bilden somit zwischeneinander einen Innenraum 21, der zur Wand 27 hin offen und beiderseits hinterschnitten ist. In diesem Innenraum 21 hinein erstrecken sich die beiden niedrigen Stege 23.

Der Abstand vom Innenraum 21 bis zu den freien Enden der gekröpften Stege 25 entspricht dem Abstand zwischen der länglichen Platte 17 und den Federschenkeln 19 des Leistenhalters 15.

Bei der Montage werden zunächst die Dübellöcher gebohrt. Die Dübel 1 sind bereits mit den Befestigungselementen vormontiert und bilden somit eine zusammengesetzte Einheit. Diese Einheit wird in einem Arbeitsgang in die Dübellöcher eingesetzt, indem beispielsweise die Einheit mit einem Hammer eingeschlagen wird, bis der Dübel 1 bündig mit dem Mauerwerk 27 abschließt. Dann werden die Enden 5 der Schrauben 3 in die Dübel 1 eingeschraubt und das Befestigungselement somit im Mauerwerk 27 festgelegt. Der über die Einstellschrauben 11, 13 bereits an der Schraube 3 vormontierte Leistenhalter 15 bildet dabei keine wesentliche Behinderung, da sich zu diesem Zeitpunkt der Leistenhalter 15 frei bezüglich der Schraube 3 und der Einstellschraube 11, 13 verdrehen kann,.

Dann werden mittels einer Laservorrichtung die Köpfe 13 der Einstellschrauben 11, 13 soweit verdreht, bis sie alle in einer gewünschten Ebene liegen. Dieses Verfahren ist weiter oben eingehender beschrieben.

Dann werden die Leistenhalter 15 mit ihrer länglichen Platte 17 so ausgerichtet, daß sich die Leiste 31 über die Platten 17 aufsetzen läßt. Die Platten 17 erstrecken sich mit ihrer Längsachse somit parallel zur Leiste 31. Die Leiste 31 wird dann leicht gegen die Wand 27 angedrückt, so daß die freien Querflächen der Köpfe 13 der Einstellschrauben 11, 13 zwischen den niedrigen Stegen 23 der Leiste 31 liegen und auf der Wandseite der Platte dieser Leiste 31 aufsitzen.

Nun wird der Leistenhalter 15 von einem Werkzeug untergriffen, notfalls gegen die Leiste 31 angedrückt und um etwa 90° verdreht. Dabei sitzt die längliche Platte 17 auf den freien Kanten der niedrigen Stege 23 auf und hintergreift beim Verdrehen die Hinterschneidungen, die von den gekröpften Stegen 25 gebildet sind. Die diagonal gegenüberliegenden Abrundungen (Fig. 3) gestatten das Verdrehen, die nicht abgerundeten Ecken der länglichen Platte 17 sorgen dagegen für einen Endanschlag.

Gleichzeitig laufen die Federschenkel 19 mit ihren Warzen gegen die Endkanten der gekröpfen Stege 25 an, werden leicht weggebogen und springen wieder in ihre ursprüngliche Lage zurück, wenn die Warzen über die Stege 25 hinausgelangt sind und sich daher die längliche Platte 17 und die Federschenkel 19 quer zur Leiste 31 erstrecken.

Wenn die Leisten 31 an der Wand 27 montiert sind, können die Fassadenplatten angebracht werden.

Die beschriebenen Abmessungen dienen nur als Anhalt; der Fachmann weiß, welche Toleranzen er fordern muß und zulassen kann, damit die Leisten 31 praktisch spielfrei auf den Befestigungselementen 3, 15 angebracht sind.

## Patentansprüche

1. Befestigungselement zur Abstandsbefestigung von Leisten (31) an einer bevorzugt vertikalen Wand (27), mit einer Schraube (3), deren eines Ende (5) zur Befestigung an der Wand ausgestaltet ist und deren anderes Ende (7) ein Gewinde aufweist, und mit einem Leistenhalter (15), der über ein ein Gegengewinde aufweisendes Bauteil (11, 13) mit der Schraube (3) verschraubt ist, **dadurch gekennzeichnet, daß** der Leistenhalter (15) gegenüber dem das Gegengewinde aufweisenden Bauteil (11, 13) frei verdrehbar und an diesem festlegbar ist.

2. Befestigungselement nach Anspruch 1, **dadurch gekennzeichnet, daß** das Gewinde der Schraube (3) ein Innengewinde (9) ist, das Bauteil (11, 13) eine in das Innengewinde (9) einschraubbare, einen Kopf (13) aufweisende Einstellschraube (11, 13) ist, die den Leistenhalter (15) verdrehbar durchsetzt, und der Leistenhalter (15) an der Einstellschraube (11, 13) festlegbar ist.

3. Befestigungselement nach Anspruch 1 oder 2, **dadurch gekennzeichnet, daß** das zur Befestigung an der Wand ausgestaltete Ende (5) der Schraube (3) einen groben, wendelförmigen Steg nach Art einer Holzschraube zum Einschrauben in einen Dübel (1) aufweist.

4. Befestigungselement nach einem der vorhergehenden Ansprüche, **dadurch gekennzeichnet, daß** die Schraube (3) aus einem Bolzen (5) gebildet ist, der nach Art einer Holzschraube ausgebildet ist, und an dessen Ende eine Hülse (7) oder ein Rundstahl angesetzt ist, die/der an ihrem/seinem freien Ende das Innengewinde (9) aufweist.

5. Befestigungselement nach einem der vorhergehenden Ansprüche, **dadurch gekennzeichnet, daß** die Einstellschraube (11, c13) den Leistenhalter (15) bevorzugt mittig durchsetzt, und daß die Leiste (31) eine Ausbildung (21, 23) aufweist, die mindestens einen Teil des Leistenhalters (15) sowie den Kopf (13) der Einstellschraube (11, 13) aufnimmt und diesen gegen einen von der Einstellschraube (11, 13) durchsetzten Sitz anhält.

6. Befestigungselement nach Anspruch 5, **dadurch gekennzeichnet, daß** die Leiste (31) auf der dem Leistenhalter (15) zugewandten Seite zwei einander zugewandte Ausnehmungen (21) aufweist, und daß der Leistenhalter (15) eine längliche Ausbildung (17) aufweist, die in Ausrichtung auf die Längsachse der Leiste (31) zwischen die Ausnehmungen (21) einführbar ist und nach Verdrehen in diese eingreift.

7. Befestigungselement nach Anspruch 6, **dadurch gekennzeichnet, daß** der Leistenhalter (15) mindestens ein Federelement (19) aufweist, das sich beim Eingriff der länglichen Ausbildung (17) in die Ausnehmungen (21) mit der Leiste (31) verrastet.

8. Befestigungselement nach Anspruch 7, **dadurch gekennzeichnet, daß** am Leistenhalter (15) parallel zur Längsachse der länglichen Ausbildung (17) zwei auseinanderweisende Federschenkel (19) vorgesehen sind, die sich bei Eingriff der länglichen Ausbildung (17) in die Ausnehmungen (21) mit deren freiem Rand (25) verrasten.

9. Verfahren zur Montage von Befestigungselementen nach einem der Ansprüche 1 bis 8, **dadurch gekennzeichnet,**
- **daß** eine Laserstrahlquelle angebracht wird, deren Laserstrahl die Ebene beschreibt, in der sich die Leistenträger befinden sollen, oder eine zu dieser parallele Ebene, und
- **daß** die Einstellschraube mittels eines Schraubendrehers bis zu einer Tiefe eingeschraubt wird, die von einem an dem Schraubendreher angebrachten Laserempfänger vorgegeben wird.

10. Verfahren nach Anspruch 9, **dadurch gekennzeichnet, daß** an einem kraftgetriebenen Schraubendreher zum Eindrehen der Einstellschraube ein Laserempfänger angebracht ist, der durch ein optische oder akustisches Signal oder automatisch veranlaßt, daß beim Auftreffen des Laserstrahles der Antrieb des Schraubendrehers angehalten wird.
